# EUROPÄISCHE PATENTSCHRIFT

(11) **EP 1 569 475 B1**
(45) Veröffentlichungstag und Bekanntmachung des Hinweises auf die Patenterteilung: **12.12.2007**
(21) Anmeldenummer: 04004471.1
(22) Anmeldetag: 27.02.2004
(51) Int. Cl.: H04Q 7/32

(54) **Vorrichtung und Verfahren zur Aktualisierung der Konfiguration des Datenspeichers der Chipkarte eines mobilen Endgeräts**
Apparatus and Method for updating the configuration of the data memory of a chip card of a mobile terminal
Dispositif et procédé pour la mise-à-jour de la configuration d'une mémoire de données dans une carte à puce d'un terminal mobile

(43) Veröffentlichungstag der Anmeldung: 31.08.2005
(73) Patentinhaber: Orga Systems GmbH, 33104 Paderborn (DE)
(72) Erfinder: Trott, Karim, 33615 Bielefeld (DE); Sinne, Gerd, 33154 Salzkotten (DE); Koslowski, Ralf, 33813 Oerlinghausen (DE)
(74) Vertreter: Richardt, Markus Albert

(56) Entgegenhaltungen:
- EP-A- 1 383 352
- WO-A-01/15463
- US-A- 6 108 540
- US-A1- 2003 220 101
- US-B1- 6 603 969

## Beschreibung

Die vorliegende Erfindung betrifft eine Vorrichtung, ein Computerprogrammprodukt und ein Verfahren, welche für die Aktualisierung der Konfiguration von mobilen Endgeräten verwendet werden können.

Unter "mobile Endgeräte" werden nachfolgend insbesondere tragbare Datenspeicher, d.h. sog. Chipkarten, mobile Telekommunikationsgeräte, Personal Digital Assistants (PDAs), mobile Computer und dergleichen verstanden.

Aus dem Stand der Technik sind verschiedene Arten und Einsatzgebiete für Chipkarten bekannt. Einen Überblick hierüber gibt das "Handbuch der Chipkarten", Wolfgang Rankl, Wolfgang Effing, Hansa Verlag 1999. Beispielsweise unterscheidet man bei Chipkarten zwischen Speicherkarten, Mikroprozessorkarten und kontaktlosen Chipkarten.

Bekannte Einsatzgebiete für Chipkarten beinhalten Anwendungen zur Authentifizierung, Zugangskontrolle, Verschlüsselung, digitalen Signatur, Bezahlung, Elektronic-Ticketing, Pay-TV, sowie als Krankenversicherungskarte und elektronische Wegfahrsperre. Von besonderer Bedeutung ist der Einsatz von Chipkarten auf dem Gebiet der Mobiltelefonie. Chipkarten kommen insbesondere nach den GSM-Mobilfunkstandard als so genannte SIM (Subscriber Identity Module) zum Einsatz. Auch bei der Variante GSM-R des GSM-Standards werden solche SIM-Chipkarten verwendet.

Chipkarten haben üblicherweise einen Datenspeicher mit oder ohne Dateisystem. Im Allgemeinen ist der Datenspeicher in Datenfelder aufgeteilt. Eine SIM hat ein hierarchisch aufgebautes Dateisystem mit einer so genannten Master-File (MF). Die MF ist das Wurzelverzeichnis des Dateibaums. Ferner hat das Dateisystem zwei Dedicated-Files (DF), in denen sich die als Elementary-Files (EF) bezeichneten Datenfelder der Chipkarte befinden. Die möglichen Dateistrukturen für die EFs sind transparent, linear fix und zyklisch. Die GSM-11.11-Spezifikation definiert 48 verschiedene EFs für die Anwendungsdaten, die in den beiden DFs zusammengefasst sind.

Entsprechende Chipkarten kommen auch nach den UMTS-Standard in der Form von USIMs (Universal Subscriber Identity Module) zum Einsatz. Bei mobilen Endgeräten einer sogenannten "trusted computing plattform" ist der Datenspeicher mit dem Endgerät fest verbunden. Der Datenspeicher ist dazu beispielsweise in einem IC ausgebildet, der zur Hardware-Identifizierung des Endgeräts dient.

Aus dem Stand der Technik sind verschiedene Vorrichtungen und Verfahren zur Speicherung von Daten und zum Datenaustausch mit einer SIM bekannt:

Aus der WO 00/48416 ist ein Verfahren zur Verwendung von auf einer SIM gespeicherten Applikation bekannt. Dabei werden die für eine Verschlüsselung und/oder Entschlüsselung und/oder digitale Signierung erforderlichen Schlüssel in einem geschützten Bereich der SIM gespeichert.

Aus der EP 0899979 A2 ist ein Verfahren zum Ändern eines einem Teilnehmer zugeordneten Diensteprofils bekannt. Nach diesem Verfahren kann der Teilnehmer selbst auf einen löschbaren Datenspeicher der SIM zugreifen, um sein Diensteprofil zu ändern oder ausgeben zu lassen.

Aus der DE 19810926 ist eine Vorrichtung zum Verwalten von Daten für den Betrieb eines Kommunikationsnetzes mit einer Vielzahl von Endgeräten bekannt, die jeweils eine SIM aufweisen. Durch die Vorrichtung ist jederzeit die Anzahl von für eine Applikation auf der Chipkarte vorgesehenen freien Speicherfeldern für den jeweiligen Chipkartentyp ermittelbar. Auf einer Applikations-Datenbank gespeicherte Applikationen sind als Kurzmeldung auf die Chipkarte übertragbar, um dort in einem freien Speicherfeld abgespeichert zu werden.

Die Druckschrift EP 1 383 352 A1 beschreibt ein Verwaltungssystem für SIM Karten mit einer zentralisierten Datenbank, in der sämtliche SIM-Informationen gespeichert sind, welche ein flexibles und bequemes Verwalten der SIMs prinzipiell ermöglicht. Ein SIM-Verwaltungsserver beinhaltet und verwaltet die Informationen der SIMs in einer Datenbank und bedient zum Beispiel die Aktualisierung der SIMs, die sich in Teilnehmer-Terminals befinden.

Druckschrift WO 01/15463 A2 betrifft die Verwaltung von Teilnehmerdaten in einem so genannten "Super-charged Network", welches ein Heim-Netzwerk mit teilnehmerspezifischen Daten und ein Besuchernetzwerk beinhaltet, welches Teilnehmerdaten zu anderen Netzwerken beinhaltet. Ein Teilnehmerprofil in einem Besuchernetzwerk kann auf Anforderung aktualisiert werden, wenn zum Beispiel Modifizierungen des Heim-Netzwerks an das Besuchernetzwerk gesendet werden.

Anstelle der Aktualisierung eines gesamten Teilnehmerprofils kann es genügen, eine Aktualisierung eines existierenden Profils mit Modifizierungen zu tätigen, die seit der letzten Aktualisierung im Profil getätigt wurden. Daher wird angeregt, lediglich Modifizierungen, wie zum Beispiel eine "Delta Teilnehmerdaten-Nachricht" zu übermitteln.

Aus der US 2002/0147012 A1 ist Mobilkommunikationsverfahren bekannt, bei dem eine "Operator list" mit bevorzugten Roaming Netzwerken an einer beliebig festgelegten Adresse eine SIM Karte gespeichert und durch eine aktualisierte "Operator list" überschrieben werden kann.

Demgegenüber liegt der Erfindung die Aufgabe zugrunde, eine verbesserte Vorrichtung zur Aktualisierung des Datenspeichers einer Chipkarte zu schaffen sowie ein entsprechendes Computerprogrammprodukt und ein entsprechendes Verfahren

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Die erfindungsgemäße Vorrichtung dient zur Aktualisierung der Konfiguration von mobilen Endgeräten. Insbesondere kann eine Ausführungsform der Vorrichtung zur Speicherung von Ist-Profilen des Datenspeichers von einer oder mehreren Chipkarten dienen. Ferner dient die Vorrichtung zur Speicherung eines Soll-Profils des oder der Datenspeicher. Zur Aktualisierung eines Datenspeichers wird zunächst ein Differenz-Profil ermittelt. Das Differenz-Profil beinhaltet solche Daten, hinsichtlich derer sich das Soll-Profil von dem Ist-Profil der betreffenden Chipkarte unterscheidet. Bei einem Profil kann es sich dabei eine Konfiguration des Datenspeichers hinsichtlich dessen Speicherstruktur und/oder Speicherbelegung handeln. Ein Profil kann dabei technische Konfigurationsdaten und/oder logisch Konfigurationsdaten beinhalten. Unter logischen Konfigurationsdaten werden dabei insbesondere solche Konfigurationsdaten verstanden, die für die Konfiguration einer Anwendung verwendet werden.

Zur Aktualisierung des Datenspeichers der Chipkarte wird nur das Differenz-Profil zu der Chipkarte übertragen. Dadurch lässt sich das für die Aktualisierung des Datenspeichers erforderliche zu übertragende Datenvolumen und damit die für die Aktualisierung erforderliche Zeit drastisch reduzieren. Dies ist insbesondere für sicherheits- und/oder zeitkritische Anwendungen wie zum Beispiel für GSM-R-Anwendungen besonders vorteilhaft. Dabei muss die Ermittlung des Differenzprofils nicht für jede Chipkarte einzeln erfolgen, sondern einmal für alle Chipkarten die von einem Ist-Profil auf ein neues Soll-Profil umkonfiguriert werden.

Nach einer bevorzugten Ausführungsform der Erfindung dient die Vorrichtung für eine Vielzahl von registrierten Chipkarten. Die Ist-Profile der Chipkarten werden in einer Datenbank der Vorrichtung gespeichert. Dabei dienen die Kennungen der Chipkarten als Datenbankschlüssel für den Zugriff auf die Ist-Profile. Bei einer Anwendung für GSM bzw. GSM-R wird vorteilhafter Weise die IMSI (International Mobil Subscriber Identity), ICCID (Integrated Chip Card ID) oder die MSISDN (Mobil Subscriber ISDN, das heißt die Telefonnummer eines Mobilfunkteilnehmers) verwendet.

Nach einer weiteren bevorzugten Ausführungsform der Erfindung hat die Vorrichtung eine weitere Datenbank zur Speicherung verschiedener Soll-Profile. Vorzugsweise hat jedes der Soll-Profile einen Namen, der als Zugriffsschlüssel für den Datenbankzugriff auf ein gespeichertes Soll-Profil verwendet wird. Alternativ werden alle definierten Profile in einer einzigen Datenbank gespeichert.

Über eine Nutzerschnittstelle kann ein Benutzer verschiedene Soll-Profile eingeben und in der Datenbank speichern. Ferner kann ein Nutzer über die Nutzerschnittstelle ein in der Datenbank gespeichertes Soll-Profil auswählen und einer oder mehrerer der registrierten Chipkarten zuordnen. Die eine oder mehreren der von dem Nutzer ausgewählten Chipkarten wird bzw. werden dann entsprechend dem ausgewählten Soll-Profils aktualisiert.

Dies ist besonders für die einheitliche Konfiguration der Chipkarten einer Teilnehmergruppe vorteilhaft. Insbesondere im GSM-R werden solche Teilnehmergruppen für Gruppenruffunktionen wie zum Beispiel Voice-Group-Call oder Voice-Broadcast definiert. Die Chipkarten dieser Teilnehmergruppen können durch Auswahl eines der Soll-Profile aus der Datenbank und der Zuordnung des ausgewählten Soll-Profils zu den Chipkartenkennungen der betreffenden Teilnehmergruppe einheitlich aktualisiert und konfiguriert werden. Das sogenannte SIM Profile Management kann damit besonders effizient durchgeführt werden.

Nach einer weiteren bevorzugten Ausführungsform der Erfindung beinhalten die Ist-Profile jeweils ein Abbild der Konfiguration des Datenspeichers der jeweils zugeordneten Chipkarte. Entsprechende Konfigurationsdaten beinhalten die Soll-Profile. Vorzugsweise beinhalten die Ist- und Soll-Profile jeweils eine Wiedergabe der aktuellen bzw. auswählbaren Datenstruktur und der Speicherinhalte eines Datenspeichers einer oder mehrerer der Chipkarten.

Nach einer weiteren bevorzugten Ausführungsform der Erfindung ist die Vorrichtung zur Übertragung der Differenz-Profile zu den Chipkarten über ein Telekommunikationsnetz, insbesondere ein digitales Mobiltelefonnetz, ausgebildet. Alternativ oder zusätzlich ist die Vorrichtung zur Übertragung der Differenzprofile über ein Chipkartenlesegerät ausgebildet.

Nach einer weiteren bevorzugten Ausführungsform der Erfindung ist der Datenspeicher der Chipkarte in Datenfelder unterteilt. Durch die Datenfelder wird ein Adressraum aufgespannt. Das Differenzprofil zur Aktualisierung des Datenspeichers einer der Chipkarten beinhaltet Aktualisierungsdaten für eines oder mehrerer dieser Datenfelder. Zusätzlich beinhaltet das Differenz-Profil jeweils eine Angabe einer Referenzadresse für die Aktualisierungsdaten in dem betreffenden Datenfeld. Von der jeweiligen Referenzadresse ab wird das betreffende Datenfeld mit seinen Aktualisierungsdaten überschrieben.

Nach einer weiteren bevorzugten Ausführungsform der Erfindung hat die Vorrichtung eine Teilnehmerdatenbank zur Speicherung der Kennungen von registrierten Chipkarten. Vorzugsweise wird als Datenbankschlüssel derselbe Primärschlüssel verwendet wie zu der Abspeicherung der Ist-Profile. Die Teilnehmerdatenbank kann für jeden der Teilnehmer eine Angabe hinsichtlich der Zuordnung des betreffenden Teilnehmers zu einer Teilnehmergruppe, dessen Funktion, Standort, Name etc. aufweisen.

Nach einer weiteren bevorzugten Ausführungsform der Erfindung hat die Vorrichtung eine Verlaufs-Datenbank zur Speicherung des zeitlichen Verlaufs der verschiedenen einer Chipkarte zugeordneten Ist-Profile. Dies ist insbesondere zur Erfüllung gesetzlicher Nachweispflichten für Anwendungen im Bereich GSM-R vorteilhaft.

Nach einer weiteren bevorzugten Ausführungsform der Erfindung ist die Vorrichtung zum Empfang einer Bestätigung von der Chipkarte ausgebildet, wonach die Aktualisierung des Datenspeichers der Chipkarte gemäß dem von der Chipkarte empfangenen Differenz-Profil ausgeführt worden ist. Nach Empfang der Bestätigung wird das der betreffenden Chipkarte zugeordnete Ist-Profil in der Datenbank durch das Soll-Profil, welches die Grundlage für die Erstellung des Differenz-Profils gebildet hat, überschrieben. Dieser Vorgang kann in der Verlaufs-Datenbank abgebildet werden.

Nach einer weiteren bevorzugten Ausführungsform der Erfindung ist die Vorrichtung zur Generierung einer Kurzmeldung für jede von einer Aktualisierung betroffene Chipkarte ausgebildet. Vorzugsweise handelt es sich bei einer solchen Kurzmeldung um eine OTA (Over The Air) Kurzmeldung, beispielsweise eine so genannte binäre SMS (Short Message Services).

Jede der Kurzmeldungen beinhaltet eine Kennung einer von der Aktualisierung betroffenen Chipkarte und das betreffende Referenz-Profil. Die Kurzmeldungen werden in einer Übertragungsvorrichtung gepuffert. Aus dem Pufferspeicher der Übertragungsvorrichtung heraus werden die Kurzmeldungen drahtlos oder drahtgebunden an die adressierten Chipkarten übertragen. Die Übertragungsvorrichtung empfängt vorzugsweise die Bestätigungen der Chipkarten und leitet diese weiter, sodass die bisherigen Ist-Profile durch das Soll-Profil, welches die Grundlage für die Erstellung des Differenz-Profils gebildet hat, überschrieben werden.

Besonders vorteilhaft ist die vorliegende Erfindung für sicherheitskritische Anwendungen, wie zum Beispiel von Notrufen in einem GSM-R-System. Durch die Reduktion des Datenvolumens für die Aktualisierung des Datenspeichers einer Chipkarte reduziert sich die für das Einlesen einer neuen Konfiguration erforderliche Zeit nachdem so genannten OTA-Download. Insbesondere ermöglicht dies den Einsatz einer OTA-Plattform in Netzen mit sicherheitsrelevanten Funktionen, wie zum Beispiel GSM-R und GSM-BOS.

Diese Netze haben Gruppenruffunktionen, die eine Konfiguration auf Systemseite und auf der Chipkartenseite erfordern. Die Änderung der Konfigurationen kann in bestimmten Anwendungsfällen eine hohe Frequenz haben, zum Beispiel für DGC (Dynamic Group Call) in Zügen in GSM-R-System. Die vorliegende Erfindung ermöglicht es, die Downloadzeiten und die Aktualisierungszeiten für neue Konfigurationen der Chipkarten zu minimieren, wodurch eine Erweiterung der möglichen Anwendungen von GSM-R und GSM-BOS gegeben ist.

Von besonderem Vorteil ist dabei insbesondere die Minimierung der Signalisierungslast bei der Übertragung der Aktualisierungsdaten, da sowohl die Anzahl als auch die Nachrichtengröße der für eine Aktualisierung erforderlichen Kurzmeldungen durch die Erfindung minimiert werden kann. Von weiterem Vorteil ist, dass das Karten-Konfigurationsmanagement über eine entsprechende Nutzerschnittstelle effizient und nutzerfreundlich durchgeführt werden kann.

Von weiterem besonderen Vorteil ist die Möglichkeit, dass die Chipkarten die Durchführung einer Aktualisierung gegenüber der Vorrichtung bestätigen. Erst nachdem eine solche Bestätigung erfolgt ist, wird das Ist-Profil mit dem zuvor ausgewählten Soll-Profil überschrieben. Damit ist insbesondere für sicherheitskritische Anwendungen die erforderliche Sicherheit gegeben, dass die seitens der Vorrichtung registrierten Ist-Profile mit den tatsächlichen Konfigurationen der Chipkarten übereinstimmen.

Im Weiteren werden bevorzugte Ausführungsformen der Erfindung mit Bezugnahme auf die Zeichnungen näher erläutert. Es zeigen:
- Figur 1: ein Blockdiagramm einer ersten Ausführungsform einer erfindungsgemäßen Vorrichtung,
- Figur 2: ein Diagramm zur Darstellung einer Ermittlung eines Differenz-Profils aus einem Ist- und einem Soll-Profil,
- Figur 3: ein Flussdiagramm zur Aktualisierung der Konfiguration einer Chipkarte,
- Figur 4: ein Blockdiagramm einer weiteren Ausführungsform der erfindungsgemäßen Vorrichtung und der erfindungsgemäßen Übertragungsvorrichtung,
- Figur 5: eine alternative Ausführungsform der Fig. 4 wobei alle Profile in einer Datenbank gespeichert werden,
- Figur 6: ein Objekt-Beziehungsdiagramm zur Darstellung einer Arbeitsweise des in der Figur 4 gezeigten Systems.

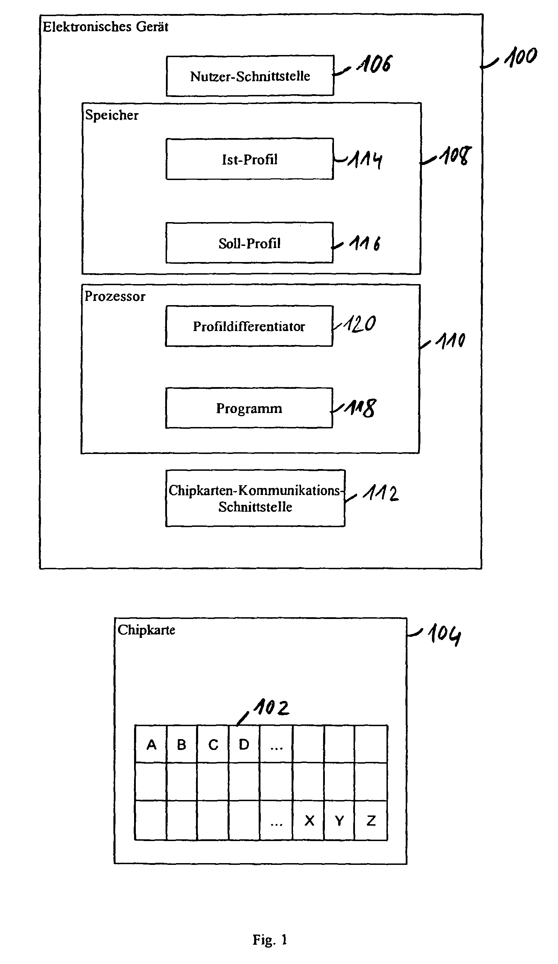

Die Figur 1 zeigt ein elektronisches Gerät 100 zur Verwaltung und Aktualisierung der Konfiguration eines Datenspeichers 102 einer Chipkarte 104. Das elektronische Gerät ist insbesondere für das sog. SIM Profilemanagement geeignet.

Der Datenspeicher 102 der Chipkarte 104 ist in Datenfelder A, B, C, ..., X, Y, Z unterteilt. Beispielsweise handelt es sich bei der Chipkarte 104 um eine so genannte SIM, wobei es sich in diesem Fall bei den Datenfeldern um EFs handelt.

Das Gerät 100 hat eine Nutzerschnittstelle 106, einen Speicher 108, einen Prozessor 110 und eine Chipkarten-Kommunikationsschnittstelle 112. Der Speicher 108 dient zur Speicherung von zumindest einem Ist-Profil 114 und einem Soll-Profil 116. Das Ist-Profil 114 beinhaltet eine Angabe der aktuellen Konfiguration des Datenspeichers 102 hinsichtlich dessen Speicherstruktur und/oder hinsichtlich der in den Datenfeldern des Datenspeichers 102 gespeicherten Daten. Das Soll-Profil 116 beinhaltet dagegen eine Angabe einer möglicherweise gewünschten Konfiguration des Datenspeichers 102 der Chipkarte 104, und zwar ebenso hinsichtlich der Struktur und/oder der zu speichernden Daten.

Der Prozessor 110 dient zur Ausführung einer Programmkomponente 118. Die Programmkomponente 118 dient zur Steuerung der Gesamtfunktion des Geräts 100. Ferner dient der Prozessor 110 zur Ausführung einer Programmkomponente 120, welcher zur Bildung eines Differenz-Profils zwischen einem Ist-Profil 114 und einem Soll-Profil 116 dient.

Über die Nutzer-Schnittstelle 106 kann ein Nutzer das Soll-Profil 116 eingeben, ein in dem Speicher 108 gespeichertes Ist-Profil 114 oder Soll-Profil 116 abrufen und sich beispielsweise auf einem Bildschirm anzeigen lassen. Ferner kann ein Nutzer das Soll-Profil 116 auswählen, um die Chipkarte 104 entsprechend zu aktualisieren.

Dadurch wird die Programmkomponente 120 gestartet, welche aus dem Ist-Profil 114 und dem Soll-Profil 116 ein Differenz-Profil ermittelt, das über die Chipkarten-Kommunikations-Schnittstelle 112 über einen Nachrichtenkanal zu der Chipkarte 104 drahtgebunden oder drahtlos übertragen wird. Der Datenspeicher 102 der Chipkarte 104 wird daraufhin entsprechend aktualisiert. Vorzugsweise erhält das elektronische Gerät 100 nachdem die Aktualisierung des Datenspeichers 102 durchgeführt worden ist, eine entsprechende Bestätigung. Daraufhin wird das Ist-Profil 114 durch das Soll-Profil 116 in dem Speicher 108 überschrieben.

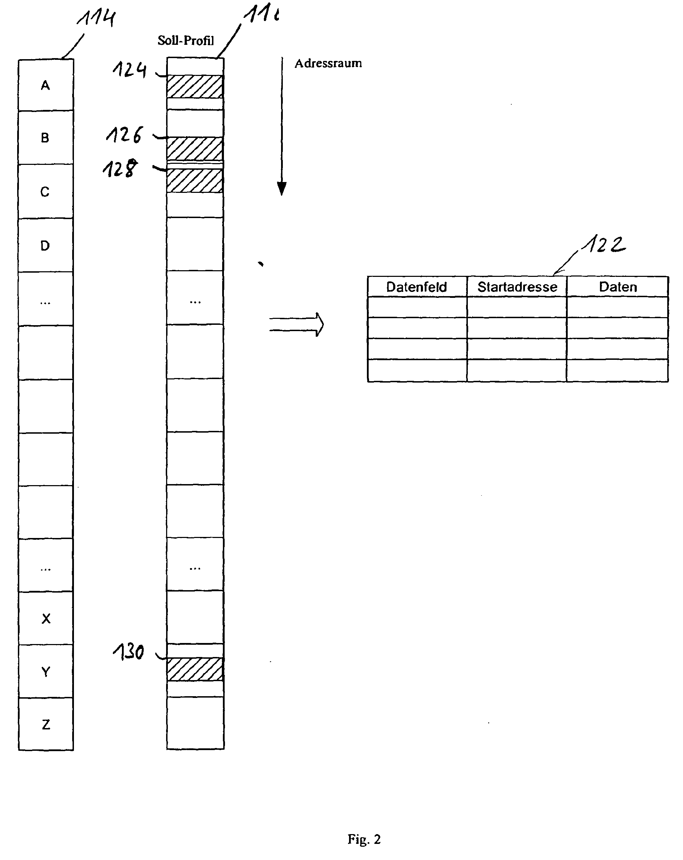

Die Figur 2 veranschaulicht an einem Beispiel die Generierung des Differenz-Profils 122 aus dem Ist-Profil 114 und dem Soll-Profil 116 (vgl. Figur 1). Durch die Datenfelder A, B, C, ... des Datenspeichers 102 wird ein Adressraum aufgespannt. Das Ist-Profil 114 beinhaltet eine Wiedergabe der in den Datenfeldern A, B, C, ... jeweils gespeicherten Daten.

Entsprechend beinhaltet das Soll-Profil 116 eine Angabe der in den Datenfeldern A, B, C, ... zu speichernden Daten. Durch die Programmkomponente 120 (vgl. Figur 1) wird das Soll-Profil 116 mit dem Ist-Profil 114 verglichen, um diejenigen Speicheradressen in dem Adressraum zu ermitteln, hinsichtlich derer die in dem Ist-Profil 114 gespeicherten Daten von den entsprechenden Daten des Soll-Profils 116 abweichen. Diese Adressbereiche sind in dem Soll-Profil 116 in der Figur 2 schraffiert dargestellt.

In dem Datenfeld A ist dabei die Startadresse für den Bereich der abweichenden Daten die Startadresse 124. In dem Datenfeld B ist dies die Startadresse 126, in dem Datenfeld C die Startadresse 128 und in dem Datenfeld Y die Startadresse 130. In dem hier betrachteten Beispielsfall sind die Daten in den weiteren Datenfeldern in dem Ist-Profil 114 und Soll-Profil 116 identisch.
In dem Differenz-Profil 122 werden diejenigen Datenfelder gespeichert, hinsichtlich derer sich das Ist-Profil 114 von dem Soll-Profil 116 unterscheidet. Dies sind in dem hier betrachteten Beispielfall die Datenfelder A, B, C und Y. Zu jedem der Datenfelder wird ferner die Startadresse zur Abspeicherung der Aktualisierungsdaten angegeben. Für das Datenfeld A ist dies die Startadresse 124, für das Datenfeld B die Startadresse 126, für das Datenfeld C die Startadresse 128 und für das Datenfeld Y die Startadresse 130. Schließlich werden für jedes Datenfeld und jede Startadresse die Aktualisierungsdaten in dem Differenz-Profil 122 abgelegt, mit welchen die aktuellen Speicherinhalte des Datenspeichers 102 überschrieben werden sollen.

Nach Empfang des Differenz-Profils 122 durch die Chipkarte 104 (vgl. Figur 1) werden die in dem Differenz-Profil 122 angegebenen Datenfelder des Datenspeichers 102 mit den Aktualisierungsdaten überschrieben, und zwar jeweils beginnend an der in dem Differenz-Profil für das jeweilige Datenfeld angegebene Startadresse.

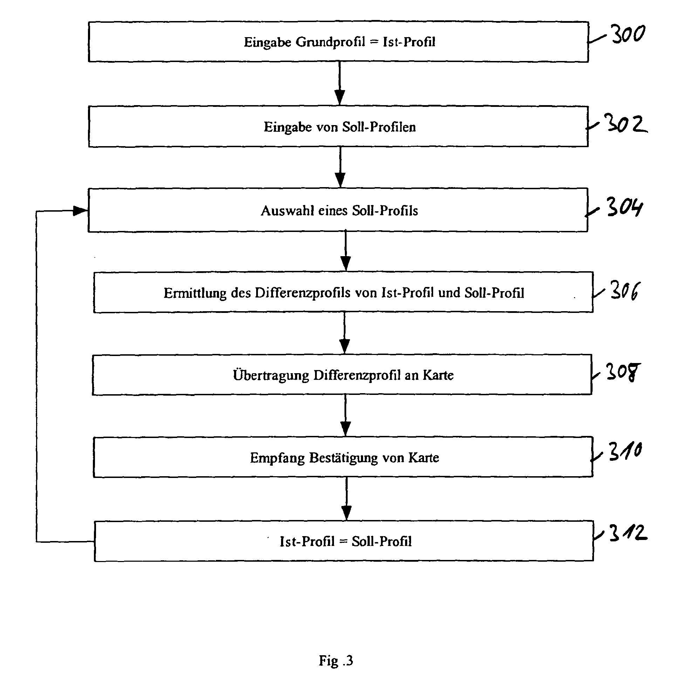

Die Figur 3 zeigt eine Ausführungsform eines Verfahrens für die Aktualisierung einer Chipkarte.

In dem Schritt 300 erfolgt eine Initialisierung des Systems. Zur Initialisierung des Systems wird ein bei der Auslieferung der Chipkarte 104 verwendetes Grundprofil abgespeichert. Dieses Grundprofil wird auch als technisches Profil bezeichnet und wird bei der Auslieferung der Chipkarten und der dazugehörigen Endgeräte, z.B. Mobiltelephone, üblicherweise vom Hersteller konfiguriert.

Das Grundprofil wird in dem Schritt 300 als aktuelles Ist-Profil abgespeichert. In dem Schritt 302 kann der Nutzer über die Nutzerschnittstelle ein oder mehrerer Soll-Profile, die von dem Grundprofil abweichen, eingeben. Beispielsweise werden verschiedene Soll-Profile für verschiedene Teilnehmergruppen eines GSM-R-Systems definiert.

In dem Schritt 304 wählt der Nutzer eines der Soll-Profile aus und ordnet dieses einer oder mehrerer der registrierten Chipkarten zu. In dem Schritt 306 wird ein Differenz-Profil zwischen dem Ist-Profil der Chipkarte und dem in dem Schritt 304 ausgewählten Soll-Profil ermittelt. Falls mehrere Chipkarten aktualisiert werden sollen, geschieht dies für jede der betroffenen Chipkarten. Die Ermittlung eines Differenzprofils kann dabei wie in der Figur 2 dargestellt erfolgen.

In dem Schritt 308 wird jedes der ermittelten Differenz-Profile an die betreffende Chipkarte übertragen. Daraufhin erfolgt die Aktualisierung der einen oder mehreren Chipkarten nach dem jeweils maßgeblichen Differenz-Profil. In dem Schritt 310 wird eine Bestätigung von einer der Chipkarten empfangen, wonach die Aktualisierung erfolgt ist. Daraufhin wird das bisherige Ist-Profil durch das in dem Schritt 304 ausgewählte Soll-Profil überschrieben (Schritt 312). Das zuvor ausgewählte Soll-Profil wird damit zum neuen Ist-Profil der Chipkarte.

Die Schritte 310 und 312 werden für jede der Chipkarten durchgeführt, von denen eine solche Bestätigung empfangen worden ist. Für den Fall, dass von einer von der Aktualisierung betroffenen Chipkarte keine Bestätigung für die Durchführung der Aktualisierung empfangen worden ist, kann eine erneute Übertragung des Differenz-Profils an die betroffene Karte (Schritt 308) erfolgen.

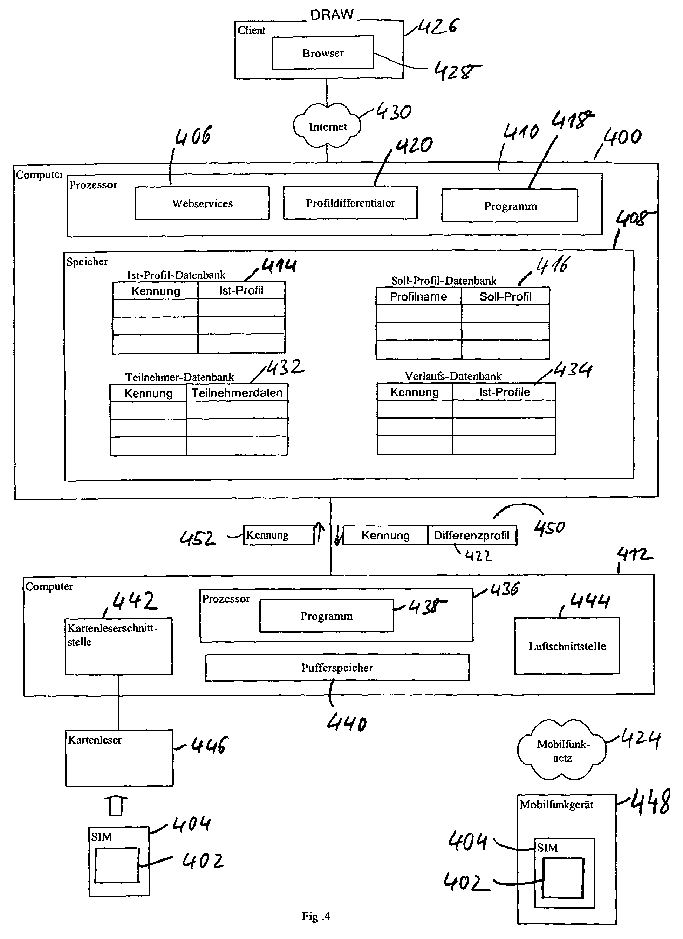

Die Figur 4 zeigt ein Blockdiagramm einer weiteren Ausführungsform. Elemente der Figur 4, die Elementen der Figuren 1 und 2 entsprechen, sind dabei mit entsprechenden Bezugszeichen gekennzeichnet.

In der Ausführungsform der Figur 4 handelt es sich bei dem elektronischen Gerät um einen Computer 400. Bei dem Computer 400 kann es sich um eine Netzwerkkomponente eines Mobilfunknetzes 424 handeln. Die Nutzer-Schnittstelle ist bei der hier betrachteten Ausführungsform als Server-Anwendung wie z.B. so genannte Webservices 406, die von dem Prozessor 410 des Computers 400 ausgeführt werden, realisiert. Von einem Client-Computer 426, der eine Client-Anwendung wie z.B. ein Terminal Programm oder ein übliches Browserprogramm 428 aufweist, kann ein Nutzer über das Internet 430 auf den Computer 400 zugreifen.

Der Speicher 408 des Computer 400 dient zur Speicherung einer Ist-Profil-Datenbank 414 und einer Soll-Profil-Datenbank 416. Die Ist-Profil-Datenbank 414 beinhaltet einen Eintrag für jede der registrierten Chipkarten des Mobilfunknetzes 424. Dabei kann beispielsweise die IMSI, ICCID oder MSISDN als Kennung für den Datenbankzugriff verwendet werden. Für jede der registrierten Chipkarten ist deren Ist-Profil mit der Kennung der betreffenden Chipkarte als Schlüssel in der Ist-Profil-Datenbank 414 gespeichert.

In der Soll-Profil-Datenbank sind verschiedene Soll-Profile gespeichert. Jedem der Soll-Profile ist ein bestimmter Profilname zugeordnet, der für den Zugriff auf ein gewähltes Soll-Profil in der Soll-Profil-Datenbank 416 verwendet werden kann.

Ferner dient der Speicher 408 zur Speicherung einer Teilnehmer-Datenbank 432 und einer Verlaufs-Datenbank 434.

In der Teilnehmer-Datenbank 432 sind Teilnehmerdaten für jeden registrierten Teilnehmer des Mobilfunknetzes 424 gespeichert. Die Teilnehmerdaten sind in der Teilnehmer-Datenbank 432 mit der Kennung der zu einem Teilnehmer gehörenden Chipkarte als Schlüssel gespeichert. Bei den Teilnehmerdaten kann es sich beispielsweise um den Namen des Teilnehmers handeln, dessen Zugehörigkeit zu einer Teilnehmergruppe, Standort oder dergleichen. Ferner kann es sich bei einem Teilnehmer auch um das Endgerät selbst handeln.

Die Verlaufs-Datenbank 434 dient zur Erfassung des zeitlichen Verlaufs der Chipkartenkonfigurationen. Für jede der Chipkarten wird die Historie der Ist-Profile, die die betreffende Chipkarte hatte, gespeichert, wobei die Kennung der betreffenden Chipkarte als Schlüssel verwendet wird. Hierzu wird jedes in der Verlaufs-Datenbank 434 gespeichertes Profil mit einen Zeitstempel, wie z.B. Änderungsdatum und Uhrzeit, versehen. Darüber hinaus kann auch erfasst werden, welcher Benutzer die jeweilige Aktualisierung veranlasst hat.

Die Chipkarten-Kommunikations-Schnittstelle wird bei dem hier betrachteten Ausführungsbeispiel durch einen weiteren Computer 412 realisiert. Bei dem Computer 412 kann es sich ebenfalls um eine Netzwerk-Komponente des Mobilfunknetzes 442 handeln.

Der Computer 412 hat einen Prozessor 436 zur Ausführung eines Programms 438. Das Programm 438 dient zur Steuerung der Funktionsabläufe des Computers 412. Der Computer 412 hat ferner einen Pufferspeicher 440, eine Kartenleser-Schnittstelle 442 und eine Luftschnittstelle 444. Die Kartenleser-Schnittstelle 442 ist mit einem Kartenleser 446, das heißt einem so genannten Chipkartenterminal, verbunden. Über die Luftschnittstelle 444 kann der Computer 412 über das Mobilfunknetz 424 mit einem Mobilfunkgerät 448 kommunizieren.

Bei Inbetriebnahme werden in dem Computer 400 zunächst die Teilnehmerdaten in der Teilnehmer-Datenbank 432 und die Grundprofile der SIMs in der Ist-Profil-Datenbank 414 mit den jeweiligen Kennungen als Schlüssel gespeichert. Von dem Client-Computer 426 aus können über das Internet 430 und die Webservices 406 Soll-Profile in der Soll-Profil-Datenbank 416 definiert werden. Beispielsweise werden verschiedene teilnehmergruppenspezifische Soll-Profile in der Soll-Profil-Datenbank 416 gespeichert, die jeweils mit dem Namen der jeweiligen Teilnehmergruppe versehen werden.

Zur Aktualisierung von beispielsweise der SIM 404 wählt ein Nutzer eines der in der Soll-Profil-Datenbank 416 gespeicherten Soll-Profile aus und verknüpft das ausgewählte Soll-Profil mit der Kennung der SIM 404. Dies kann beispielsweise grafisch interaktiv mittels "Drag-and-Drop" oder über Auswahllisten, das heißt so genannte "Pull-Down" oder "Push-up"-Menüs erfolgen.

Nach der Zuordnung des ausgewählten Soll-Profils zu der SIM 404 wird das Differenz-Profil 422 für die SIM 404 ermittelt, beispielsweise so wie dies in der Figur 2 dargestellt ist. Hierzu wird die Programmkomponente 420 gestartet, die auf die Ist-Profil-Datenbank 414 zugreift, um das aktuelle Ist-Profil der SIM 404 aus der Ist-Profil-Datenbank 414 auszulesen, um daraus das Differenz-Profil 422 bezüglich des ausgewählten Soll-Profils zu ermitteln.

Ferner generiert die Programmkomponente 420 eine Kurzmeldung 450, beispielsweise in Form einer so genannten binären SMS. Die Kurzmeldung 450 beinhaltet die Kennung der SIM 404 sowie das Differenz-Profil 422. Die Kurzmeldung 450 wird von dem Computer 400 an den Computer 412 übertragen. Wenn von dem Nutzer mehrere SIMs für die Aktualisierung ausgewählt worden sind, wird für jede der ausgewählten SIMs eine entsprechende Kurzmeldung erzeugt und zu dem Computer 412 übertragen. Die Kurzmeldungen 450 werden in dem Pufferspeicher 440 zwischengespeichert. Alternativ werden die Kurzmeldungen 450 von dem Computer 412 erzeugt.

Wenn sich die SIM 404 in dem Kartenleser des Mobilfunkgeräts 448 befindet und das Mobilfunkgerät 448 in dem Mobilfunknetz 424 eingeloggt ist, wird die Kurzmeldung 450 aus dem Pufferspeicher 440 über die Luftschnittstelle 444 und das Mobilfunknetz zu dem Mobilfunkgerät 448 übertragen. Wenn sich hingegen die SIM 404 in dem Kartenleser 446 befindet, wird die Kurzmeldung 450 aus dem Pufferspeicher 440 über die Kartenleserschnittstelle 442 und den Kartenleser 446 zu der SIM 404 übertragen.

Nach Empfang der Kurzmeldung 450 erfolgt die Aktualisierung des Datenspeichers 402 gemäß dem Differenz-Profil 422. Nach erfolgreicher Aktualisierung gibt die SIM 404 eine Bestätigung 452 ab, die von dem Kartenleser 446 bzw. dem Mobilfunknetz 424 über den Computer 412 an den Computer 400 übertragen wird. Die Bestätigung 452 beinhaltet dabei zumindest die Kennung der SIM 404.

Nach Empfang der Bestätigung 452 wird das in der Ist-Profil-Datenbank 414 gespeicherte Ist-Profil der SIM 404 durch das ausgewählte Soll-Profil überschrieben. Das überschriebene Ist-Profil wird in der Verlaufsdatenbank 434 mit der Kennung SIM 404 als Schlüssel abgespeichert.

Die Bestätigung 452 der erfolgten Aktualisierung ist als Qualitätskontrolle hinsichtlich des Download-Prozesses insbesondere für sicherheitskritische Anwendungen sehr vorteilhaft. Die Bestätigung 452, die auch als Proof of Receipt (PoR)-Meldung bezeichnet wird, wird vorzugsweise als Kurzmeldung, das heißt beispielsweise als binäre SMS von der SIM 404 abgesendet.

Beispielsweise meldet der verarbeitende Prozess auf der Chipkarte über diese Kurzmeldung wie viele OTA-Kommandos der zuvor empfangenen Kurzmeldung 450 von ihm ordnungsgemäß verarbeitet werden konnten, und im Falle eines Fehlers in der Bearbeitung den Fehlercode. Nach dem Auftreten eines Fehlers bei der Verarbeitung eines OTA-Kommandos durch den verarbeitenden Prozess auf der Chipkarte, wird die Verarbeitung von eventuellen weiteren noch nicht abgearbeiteten OTA-Kommandos der Kurzmeldung 450 abgebrochen und eine entsprechende Status-Fehlermeldung als Kurzmeldung an den Computer 400 übertragen.

Neben der Einrichtung von Gruppenruffunktionen in GSM-R und GSM-BOS ist das System der Figur 4 besonders geeignet zur Einrichtung von Roaming-Profilen in einem GMS-Netz, von Vorrangschaltungen für privilegierte Teilnehmer, sog. enhanced
Multi-Level Precedence & Preemption (eMLPP) sowie für die Telefonbuchverwaltung für Großkundenteilnehmer. Weitere Anwendungsmöglichkeiten beinhalten
- Verwaltung und Konfiguration von Corporate Customer Profilen, z.B. Firmentelefonbuchkonfiguration,
- Roaming in GSM Netzen,
- Einrichtung von Priviligierten Teilnehmergruppen mit Vorrangsberechtigung vor anderen Teilnehmern in GSM Netzen,
- Verwaltung von Roaming Profilen in GSM Netzen,
- Einrichtung von Rufgruppen (Action Teams) in GSM BOS,
- Verwaltung von Geräte Konfigurationen (Device Management).

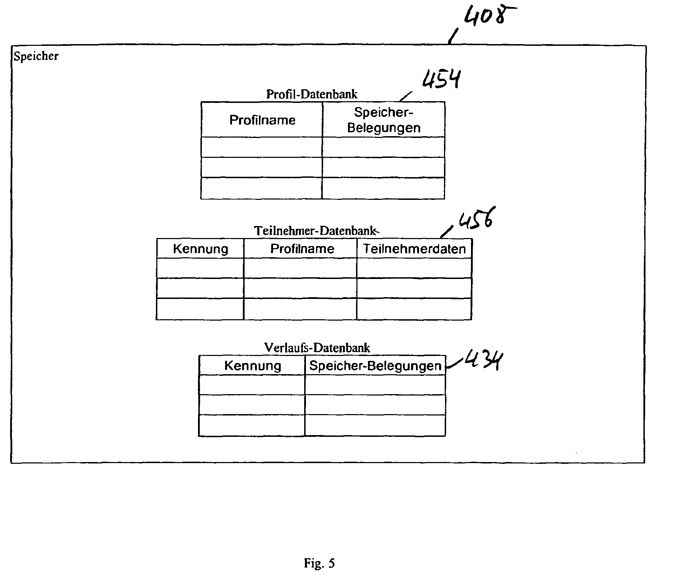

Die Figur 5 zeigt eine alternative Ausführungsform für die Strukturierung des Speichers 408 des Computers 400 der Figur 4. Im Gegensatz zu der Ausführungsform der Fig. 4 sind in der Ausführungsform der Fig. 5 alle Konfigurationsdaten in einer einzigen Datenbank 454. Es werden also die Ist- und die Soll-Profile nicht gesondert abgespeichert, sondern alle Konfigurations-Profile, die überhaupt definiert sind, werden in der Datenbank 454 abgespeichert. Jedes der Konfigurations-Profile hat dabei einen Profilnamen als Primär-Schlüssel für den Datenbankzugriff und die Speicherbelegungen und/oder Speicherstrukturangabe für den oder die konfigurierten oder zu konfigurierenden Datenspeicher.

In der Teilnehmer-Datenbank 456 ist jedem der Teilnehmer ein Profilname zugeordnet. Damit ist das Ist-Profil jedes Teilnehmers in dem Speicher 408, d.h. der Datenbank 454, eindeutig identifiziert. Wenn durch eine Nutzereingabe der Profilname, der einem Teilnehmer zugeordnet ist, durch einen anderen Profilnamen, der in der Datenbank 454 als Schlüssel vorhanden ist, ersetzt werden soll, so erfolgt die Differenzprofilbildung zwischen dem neu aus der Datenbank 454 für den Teilnehmer ausgewählten Profil und dem bisherigen Ist-Profil, wie es über den bisherigen Eintrag in der Teilnehmer-Datenbank 456 definiert ist. Nachdem die Bestätigung 452 (vgl. Fig. 4) empfangen worden ist, wird der Profilname des neue ausgewählten Profils in der Teilnehmerdatenbank anstelle des vorherigen Ist-Profilnamens abgespeichert. Der vorherige Ist-Profilname und/oder die entsprechenden Speicherbelegungen werden in der Verlaufs-Datenbank 434 gespeichert.

Diese Ausführungsform hat gegenüber der Ausführungsform der Fig. 4 den Vorteil, dass nur eine einzige Datenbank zur Abspeicherung aller Konfigurations-Profile erforderlich ist.

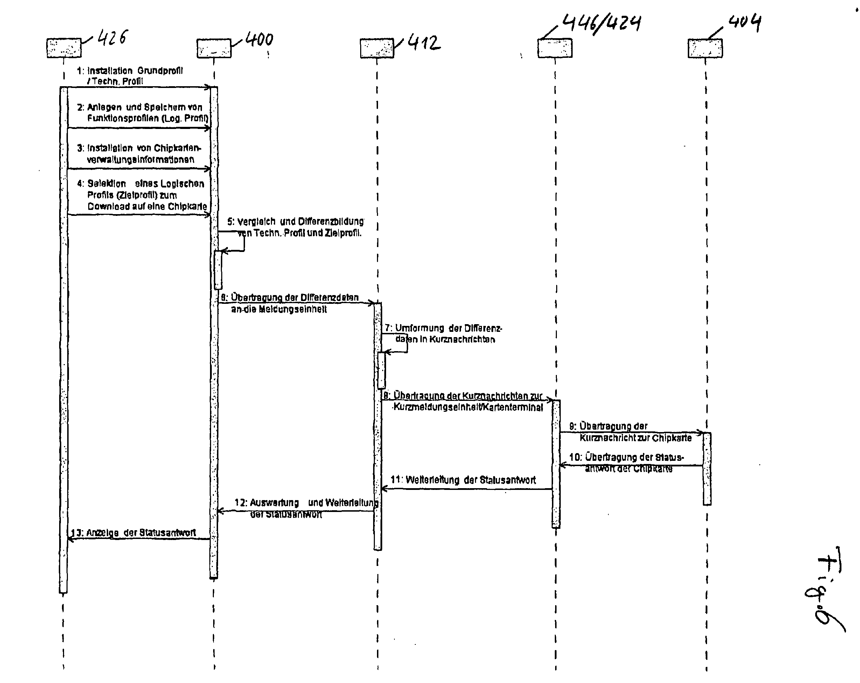

In der Figur 6 ist eine Arbeitsweise des Systems der Figuren 4 und 5 anhand eines Objekt-Beziehungs-Diagramms dargestellt. Elemente der Figur 6, die Elementen der Figuren 4 und 5 entsprechen, sind dabei mit denselben Bezugszeichen gekennzeichnet.

In dem Schritt 1 erfolgt die Installation der Grundprofile durch Übertragung von dem Client 426 an den Computer 400. In dem Schritt 2 erfolgt das Anlegen und Speichern von Soll-Profilen, die auch als Funktionsprofile oder logische Profile bezeichnet werden. Diese werden ebenfalls von dem Client-Computer 426 an den Computer 400 übertragen. In dem Schritt 3 erfolgt die Installation von Chipkarten-Verwaltungsinformationen, also beispielsweise die Speicherung der Teilnehmerdaten in der Teilnehmer-Datenbank. Die entsprechenden Teilnehmerdaten werden ebenfalls von dem Client-Computer 426 an den Computer 400 übertragen. In dem Schritt 4 wird eines der Soll-Profile als Zielprofil für die Aktualisierung zumindest einer der registrierten Chipkarten selektiert.

Daraufhin wird in dem Schritt 5 durch den Computer das Differenz-Profil ermittelt. In dem Schritt 6 wird das Differenzprofil von dem Computer 400 an den Computer 412 übertragen. In der hier betrachteten Ausführungsform erfolgt in dem Computer 412 die Umformung der Differenz-Profile in Kurzmeldungen (Schritt 7).

In dem Schritt 8 wird die Kurzmeldung über den Kartenleser 446 bzw. das Mobilfunknetz 424 zur der SIM 408 übertragen und dort empfangen (Schritt 9). Nach Aktualisierung des Datenspeichers 402 der SIM 404 erfolgt in dem Schritt 10 die Übertragung der Statusantwort, das heißt der Bestätigung 452 oder einer Fehlermeldung, über den Kartenleser 446 bzw. das Mobilfunknetz 424, den Computer 412 (Schritt 11) an den Computer 400 (Schritt 12).

Wenn es sich bei der Statusantwort um eine Bestätigung 452 handelt, wird das Ist-Profil durch das neue Soll-Profil in der Ist-Profil-Datenbank überschrieben. In dem Schritt 13 kann ferner eine Anzeige der Statusantwort auf dem Client-Computer 426 erfolgen.

### Bezugszeichenliste

- 100: Gerät
- 102: Datenspeicher
- 104: Chipkarte
- 106: Nutzer-Schnittstelle
- 108: Speicher
- 110: Proozessor
- 112: Chipkarten-Kommunikations-Schnittstelle
- 114: Ist-Profil
- 116: Soll-Profil
- 118: Programmkomponente
- 120: Programmkomponente
- 122: Differenz-Profil
- 124: Startadresse
- 126: Startadresse
- 128: Startadresse
- 130: Startadresse
- 400: Computer
- 402: Datenspeicher
- 404: SIM
- 406: Webservices
- 408: Speicher
- 410: Prozessor
- 412: Computer
- 414: Ist-Profil-Datenbank
- 416: Soll-Profil-Datenbank
- 418: Programmkomponente
- 420: Programmkomponente
- 422: Differenz-Profil
- 424: Mobilfunknetz
- 426: Client-Computer

- 428: Browser-Programm
- 430: Internet
- 432: Teilnehmer-Datenbank
- 434: Verlaufs-Datenbank
- 436: Prozessor
- 438: Programm
- 440: Pufferspeicher
- 442: Kartenleser-Schnittstelle
- 444: Luftschnittstelle
- 446: Kartenleser
- 448: Mobilfunkgerät
- 450: Kurzmeldung
- 452: Bestätigung
- 454: Datenbank
- 456: Teilnehmer-Datenbank

## Patentansprüche

1. Vorrichtung zur Aktualisierung der Konfiguration des Datenspeichers (102, 402) einer Chipkarte (104,404) eines Mobilfunkteilnehmers, wobei die Chipkarte (104,404) einen Datenspeicher (102,402) aufweist, der in Datenfelder (A, B, C, D, ..., X, Y, Z) unterteilt ist, mit
- Mitteln (108, 408) zur Speicherung eines Soll-Profils (116) der Chipkarte (104,404),
**gekennzeichnet durch**
- Mittel (108, 408) zur Speicherung eines Ist-Profils (114) der Chipkarte (104,404),
- Mittel (110, 120) zur Bestimmung eines Differenz-Profils (122,422) hinsichtlich dessen sich das Ist-Profil (114) von dem Soll-Profil (116) unterscheidet, wobei das Differenzprofil (122,422) eine Angabe zumindest eines der Datenfelder und einer Referenz-Adresse (124, 126, 128, 130) für das Schreiben von, Aktualisierungsdaten in das zumindest eine Datenfeld des Datenspeichers (102,402) der Chipkarte (104,404) aufweist,
- Mittel (112; 412) zur Übertragung des Differenzprofils (122,422) zur Chipkarte (104,404) zur Aktualisierung der Konfiguration des Datenspeichers (102,402) der Chipkarte (104,404),
- Mittel (112, 410) zum Empfang einer Bestätigung (452) von der Chipkarte (104,404), wonach der Datenspeicher (102,402) der Chipkarte (104,404) entsprechend dem Differenzprofil (122,422) aktualisiert worden ist,
- Mittel zur Aktualisierung des gespeicherten Ist-Profils (114) der Chipkarte (104,404), nachdem die Bestätigung empfangen worden ist,
wobei **durch** das Differenzprofil (122,422) die Konfiguration einer Gruppenruffunktion einer Teilnehmergruppe des Mobilfunkteilnehmers aktualisierbar ist.

2. Vorrichtung nach Anspruch 1, wobei die Mittel (108,408) zur Speicherung eines Ist-Profils (114) eine erste Datenbank (414) zur Speicherung der Ist-Profile (114) verschiedener Chipkarten (104,404) mit Kennungen der Chipkarten als Schlüssel aufweisen und die Mittel (108,408) zur Speicherung eines Soll-Profils (116) eine zweite Datenbank (416) zur Speicherung von verschiedenen Soll-Profilen (116) aufweisen.

3. Vorrichtung nach Anspruch 1, wobei die Mittel (108,408) zur Speicherung eines Ist-Profils (114) und die Mittel (108,408) zur Speicherung eines Soll-Profils (116) durch eine Datenbank zur Speicherung aller definierten Ist- und für die Auswahl zur Verfügung stehenden Soll-Profile realisiert sind.

4. Vorrichtung nach einem der vorhergehenden Ansprüche, mit Mitteln (412, 444) zur Übertragung des Differenzprofils (122,422) über ein Telekommunikationsnetz (424).

5. Vorrichtung nach einem der vorhergehenden Ansprüche, mit Mitteln (412, 442) zur Übertragung des Differenzprofils (122,422) über ein Chipkartenlesegerät (446).

6. Vorrichtung nach einem der vorhergehenden Ansprüche, mit einer Teilnehmerdatenbank (432) zur Speicherung der Kennungen von registrierten Chipkarten (104,404).

7. Vorrichtung nach einem der vorhergehenden Ansprüche, mit einer Nutzerschnittstelle (106; 406) zur Eingabe der Soll-Profile (116), zur Auswahl eines der Soll-Profile (116) und zur Zuordnung eines ausgewählten Soll-Profils (116) zu einer oder mehrerer der registrierten Chipkarten (104,404).

8. Vorrichtung nach einem der vorhergehenden Ansprüche, mit einer Verlaufs-Datenbank (434) zur Speicherung eines zeitlichen Verlaufs von einer der Chipkarte (104,404) zugeordneten Ist-Profilen (114).

9. Vorrichtung einem der vorhergehenden Ansprüche, mit Mitteln (410, 436) zur Generierung einer Kurzmeldung (450) für jeder von einer Aktualisierung betroffenen Chipkarte (104,404) zur Übertragung der Kurzmeldungen an die betroffenen Chipkarten (104,404), wobei die Kurzmeldung (450) eine Kennung einer von der Aktualisierung betroffenen Chipkarte (104,404) und das Differenzprofil (122,422) beinhaltet.

10. Verfahren zur Aktualisierung der Konfiguration des Datenspeichers einer Chipkarte eines Mobilfunkteilnehmers, wobei die Chipkarte (104,404) einen Datenspeicher (102,402) aufweist, der in Datenfelder (A, B, C, D, ..., X, Y, Z) unterteilt ist, mit folgenden Schritten:
- Speicherung eines Soll-Profils (116) der Chipkarte (104,404),
**gekennzeichnet durch**
- Speicherung eines Ist-Profils (114) der Chipkarte (104,404),
- Bestimmung eines Differenz-Profils (122,422) hinsichtlich dessen sich das Ist-Profil (114) von dem Soll-Profil (116) unterscheidet, wobei das Differenzprofil (122,422) eine Angabe zumindest eines der Datenfelder und einer Referenz-Adresse (124, 126, 128, 130) für das Schreiben von Aktualisierungsdaten in das zumindest eine Datenfeld des Datenspeichers (102,402) der Chipkarte (104,404) aufweist,
- Übertragung des Differenzprofils (122,422) zur Chipkarte (104,404) zur Aktualisierung der Konfiguration des Datenspeichers (102,402) der Chipkarte (104,404),
- Empfang einer Bestätigung (452) von der Chipkarte (104,404), wonach der Datenspeicher (102,402) der Chipkarte (104,404) entsprechend dem Differenzprofil (122,422) aktualisiert worden ist,
- Aktualisierung des gespeicherten Ist-Profils (114) der Chipkarte (104,404), nachdem die Bestätigung empfangen worden ist,
wobei **durch** das Differenzprofil (122,422) die Konfiguration einer Gruppenruffunktion einer Teilnehmergruppe des Mobilfunkteilnehmers aktualisierbar ist.

11. Computerprogrammprodukt zur Aktualisierung der Konfiguration des Datenspeichers einer Chipkarte mit Programminstruktionen zur Durchführung der Schritte des Verfahrens nach Anspruch 10.

## Claims

1. Device for updating the configuration of data memory (102, 402) of a chip card (104, 404) of a mobile subscriber, whereby chip card (104, 404) features a data memory (102, 402), which is divided up into data fields (A, B, C, D, ..., X, Y, Z), with
- means (108, 408) of storing a target profile (116) of chip card (104, 404),
**characterized by**
- means (108, 408) of storing a current profile (114) of chip card (104, 404),
- means (110, 120) of determining a difference profile (122, 422), in respect of which current profile (114) differs from target profile (116), whereby difference profile (122, 422) features a specification of at least one of the data fields and a reference address (124, 126, 128, 130) for writing update data into at least one data field of data memory (102, 402) of chip card (104, 404),
- means (112, 412) of transmitting difference profile (122, 422) to chip card (104, 404) to update the configuration of data memory (102, 402) of chip card (104, 404),
- means (112, 410) of receiving a confirmation (452) from chip card (104, 404), stating that data memory (102, 402) of chip card (104, 404) has been updated in accordance with difference profile (122, 422),
- means of updating saved current profile (114) of chip card (104, 404), once the confirmation has been received.
whereby the configuration of a group call function of a subscriber group of the mobile subscriber can be updated by means of difference profile (122, 422).

2. Device according to Claim 1, wherein means (108, 408) of storing a current profile (114) features a first database (414) to store current profiles (114) of various chip cards (104, 404) with identification codes of the chip cards used as a key, and means (108, 408) of storing a target profile (116) features a second database (416) to store various target profiles (116).

3. Device according to Claim 1, wherein means (108, 408) of storing a current profile (114) and means (108, 408) of storing a target profile (116) are implemented by means of a database for storing all defined current profiles and all target profiles that are available for selection.

4. Device according to one of the preceding claims, with means (412, 444) of transmitting difference profile (122, 422) via a telecommunications network (424).

5. Device according to one of the preceding claims, with means (412, 442) of transmitting difference profile (122, 422) via a chip card reader (446).

6. Device according to one of the preceding claims, with a subscriber database (432) to store the identification codes of registered chip cards (104, 404).

7. Device according to one of the preceding claims, with a user interface (106, 406) used to input target profiles (116), to select one of target profiles (116), and to assign a selected target profile (116) to one or more of registered chip cards (104, 404).

8. Device according to one of the preceding claims, with a history database (434) to store a progression over time of one of current profiles (114) assigned to chip card (104, 404).

9. Device of one of the preceding claims, with means (410, 436) for generating a short message (450) for each chip card (104, 404) affected by an update in order to transmit the short messages to affected chip cards (104, 404), whereby short message (450) contains an identification code of a chip card (104, 404) affected by the update and difference profile (122, 422).

10. Procedure for updating the configuration of the data memory of a chip card of a mobile subscriber, whereby chip card (104, 404) features a data memory (102, 402), which is divided up into data fields (A, B, C, D, ..., X, Y, Z), with the following steps:
- storage of a target profile (116) of chip card (104, 404),
**characterized by**
- storage of a current profile (114) of chip card (104, 404),
- determination of a difference profile (122, 422), in respect of which current profile (114) differs from target profile (116), whereby difference profile (122, 422) features a specification of at least one of the data fields and a reference address (124, 126, 128, 130) for writing update data into at least one data field of data memory (102, 402) of chip card (104, 404),
- transmission of difference profile (122, 422) to chip card (104, 404) to update the configuration of data memory (102, 402) of chip card (104, 404),
- reception of confirmation (452) from chip card (104, 404), stating that data memory (102, 402) of chip card (104, 404) has been updated in accordance with difference profile (122, 422),
- updating of saved current profile (114) of chip card (104, 404), once the confirmation has been received,
whereby the configuration of a group call function of a subscriber group of the mobile subscriber can be updated by means of difference profile (122, 422).

11. Computer program product for updating the configuration of the data memory of a chip card with program instructions to execute the steps of the procedure according to Claims 10.

## Revendications

1. Dispositif pour la mise à jour de la configuration de la mémoire de données (102, 402) d'une carte à puce (104, 404) d'un abonné de radiocommunication mobile, la carte à puce (104, 404) présentant une mémoire de données (102, 402) qui est subdivisée en champs de données (A, B, C, D, ..., X, Y, Z), avec
- des moyens (108, 408) pour la mémorisation d'un profil souhaité (116) de la carte à puce (104, 404),
**caractérisé par**
- des moyens (108, 408) pour la mémorisation d'un profil réel (114) de la carte à puce (104, 404),
- des moyens (110, 120) pour la détermination d'un profil de différence (122, 422) par rapport auquel le profil réel (114) se distingue du profil souhaité (116), le profil de différence (122, 422) présentant une indication au moins d'un des champs de données et d'une adresse de référence (124, 126, 128, 130) pour l'inscription de données de mise à jour dans au moins un champ de données de la mémoire de données (102, 402) de la carte à puce (104, 404),
- des moyens (112 ; 412) pour le transfert du profil de différence (122, 422) vers la carte à puce (104, 404) pour la mise à jour de la configuration de la mémoire de données (102, 402) de la carte à puce (104, 404),
- des moyens (112, 410) pour la réception d'une confirmation (452) de la carte à puce (104, 404), selon laquelle la mémoire de données (102, 402) de la carte à puce (104, 404) a été mise à jour conformément au profil de différence (122, 422),
- des moyens pour la mise à jour du profil réel (114) mémorisé de la carte à puce (104, 404), après que la confirmation a été reçue,
dans lequel la configuration d'une fonction d'appel de groupe d'un groupe d'abonnés de l'abonné de radiocommunication mobile peut être mise à jour par le profil de différence (122, 422).

2. Dispositif selon la revendication 1, les moyens (108, 408) pour la mémorisation d'un profil réel (114) présentant une première base de données (414) pour la mémorisation du profil réel (114) de différentes cartes à puce (104, 404) avec identifications des cartes à puce sous forme de codes et les moyens (108, 408) pour la mémorisation d'un profil souhaité (116) présentant une deuxième base de données (416) pour la mémorisation de différents profils souhaités (116).

3. Dispositif selon la revendication 1, les moyens (108, 408) pour la mémorisation d'un profil réel (114) et les moyens (108, 408) pour la mémorisation d'un profil souhaité (116) étant réalisés par une base de données pour la mémorisation de tous les profils réels et profils souhaités disponibles à la sélection définis.

4. Dispositif selon l'une des revendications précédentes, avec des moyens (412, 444) pour le transfert du profil de différence (122, 422) sur un réseau de télécommunication (424).

5. Dispositif selon l'une des revendications précédentes, avec des moyens (412, 442) pour le transfert du profil de différence (122, 422) sur un lecteur de cartes à puce (446).

6. Dispositif selon l'une des revendications précédentes, avec une base de données d'abonnés (432) pour la mémorisation des identifications de cartes à puce enregistrées (104, 404).

7. Dispositif selon l'une des revendications précédentes, avec une interface utilisateur (106 ; 406) pour la saisie des profils souhaités (116), pour la sélection d'un des profils souhaités (116) et pour l'attribution d'un profil souhaité choisi (116) à une ou plusieurs des cartes à puce enregistrées (104, 404).

8. Dispositif selon l'une des revendications précédentes, avec une base de données d'évolution (434) pour la mémorisation d'une évolution dans le temps de profils réels (114) attribués à l'une des cartes à puce (104, 404).

9. Dispositif selon l'une des revendications précédentes, avec des moyens (410, 436) destinés à la génération d'un message d'alerte (450) pour chaque carte à puce (104, 404) concernée par une mise à jour pour transmettre les messages d'alerte aux cartes à puce (104, 404) concernées, le message d'alerte (450) comportant une identification d'une carte à puce (104, 404) concernée par la mise à jour et le profil de différence (122, 422).

10. Procédé pour la mise à jour de la configuration de la mémoire de données d'une carte à puce d'un abonné de radiocommunication mobile, la carte à puce (104, 404) présentant une mémoire de données (102, 402) qui est subdivisée en champs de données (A, B, C, D, ..., X, Y, Z), comportant les étapes suivantes :
- mémorisation d'un profil souhaité (116) de la carte à puce (104, 404),
**caractérisé par**
- mémorisation d'un profil réel (114) de la carte à puce (104, 404),
- détermination d'un profil de différence (122, 422) par rapport auquel le profil réel (114) se distingue du profil souhaité (116), le profil de différence (122, 422) présentant une indication au moins d'un des champs de données et d'une adresse de référence (124, 126, 128, 130) pour l'inscription de données de mise à jour dans au moins un champ de données de la mémoire de données (102, 402) de la carte à puce (104, 404),
- transfert du profil de différence (122, 422) vers la carte à puce (104, 404) pour la mise à jour de la configuration de la mémoire de données (102, 402) de la carte à puce (104, 404),
- réception d'une confirmation (452) de la carte à puce (104, 404), selon laquelle la mémoire de données (102, 402) de la carte à puce (104, 404) a été mise à jour conformément au profil de différence (122, 422),
- mise à jour du profil réel (114) mémorisé de la carte à puce (104, 404), après que la confirmation a été reçue,
dans lequel la configuration d'une fonction d'appel de groupe d'un groupe d'abonnés de l'abonné de radiocommunication mobile peut être mise à jour par le profil de différence (122, 422).

11. Produit logiciel pour la mise à jour de la configuration de la mémoire de données d'une carte à puce à l'aide d'instructions de programme pour l'exécution des étapes du procédé selon la revendication 10.
